Europäisches Patentamt

European Patent Office

Office européen des brevets

(11) Publication number: **0 129 577**
**B1**

# EUROPEAN PATENT SPECIFICATION

(45) Date of publication of patent specification: **14.10.87**

(21) Application number: **84900148.2**

(22) Date of filing: **15.12.83**

(86) International application number:
**PCT/SE83/00457**

(87) International publication number:
**WO 84/02413 21.06.84 Gazette 84/15**

(51) Int. Cl.⁴: **G 08 B 13/18** // F16P3/14

(54) A MICROPROCESSOR-CONTROLLED LIGHT SCREEN.

(30) Priority: **16.12.82 SE 8207184**

(43) Date of publication of application:
**02.01.85 Bulletin 85/01**

(45) Publication of the grant of the patent:
**14.10.87 Bulletin 87/42**

(84) Designated Contracting States:
**AT BE CH DE FR GB LI LU NL SE**

(56) References cited:
**GB-A-2 023 282**
**SE-A- 324 726**
**SE-A- 385 746**
**SE-A- 406 634**
**SE-A- 417 462**
**US-A-3 742 222**

**Derwent's abstract No 934519 k/16, SU 990 813**

(73) Proprietor: **AKTIEBOLAGET INSTITUTET FÖR INNOVATIONSTEKNIK**
**Drottning Kristinas väg 47**
**S-114 28 Stockholm (SE)**

(72) Inventor: **JÖNSSON, Nils**
**Högstigen 10**
**S-182 74 Stocksund (SE)**

(74) Representative: **Inger, Lars Ulf Bosson**
**L + U INGER Patentbyra HB Garvaregatan 12**
**S-262 00 Ängelholm (SE)**

EP 0 129 577 B1

## Description

Technical Field

The present invention relates to a microprocessor-controlled light screen intended to guard against accidents when working with dangerous machines, for example presses, should an object be passed unintentionally into the screen opening. Such light screens, or barriers, must be highly reliable.

The light screen comprises a series of electrical light transmitters which are placed in a holder on one side of the curtain screen and which are arranged to send out a train of light pulses (codes), while a corresponding number of light pulse detectors are arranged in a holder on the opposite side of the opening, for detecting the presence of an object in the screen opening, as a result of one or more of the beams transmitted being blocked by said object. The transmitters used may be light diodes which transmit invisible IR-light. The light screen is coupled to separate sensing devices, which stop the machine should an object be passed into said opening, or should a fault occur in the monitoring system.

It is previously known (US—A—3 742 222) a multiple light beam sensing system with pulsed light sources, plural light sensors, and a digital circuit responsive to each of the sensors to detect the interruption of light of any sensor. The system thereby comprises light source means for projecting a plurality of adjacent parallel light beams through a defined space, oscillator means for generating periodically recurring pulses, connected with said light source means whereby said light beams are pulsed in accordance therewith; a plurality of light sensors corresponding to said plurality of light beams and each located for intercepting a different one of said light beams to produce a pulsed signal dependent on receipt of the corresponding pulsed light beam, and digital detector means having a plurality of signal inputs each coupled to a different one of said light sensors for producing a first output signal, indicating the absence of an object within the defined space during receipt of pulsed light beams at each input, and a second output signal indicating the presence of an object within said defined space upon interruption of any one of said pulsed light beams. The output signals from the digital detector may also be dependent on the input signals.

It is also known (SE—B—7905499—5, publ. no. 417 462) a so called light barrier, i.e., a photo cell controlled device to prevent from damages to persons operating a machine, whereby the device comprises light sources and light sensors creating different to and from light beams placed one over the other within a defined space, whereby the light sensors control the switching on and off of a machinery. The light sensor of the lower light beam is thereby arranged in such a way that a minimal interruption of the said light beam does not create a stop of the machinery. Thus there is a primary light beam from a light source of a first side which beam is received at a second side and initiates a retransmittance of a second light beam from the second side to the first side.

Disclosure of the Present Invention

The characterizing features of the present invention are set forth in the following claims.

The invention will now be described in more detail with reference to the accompanying drawings, in which

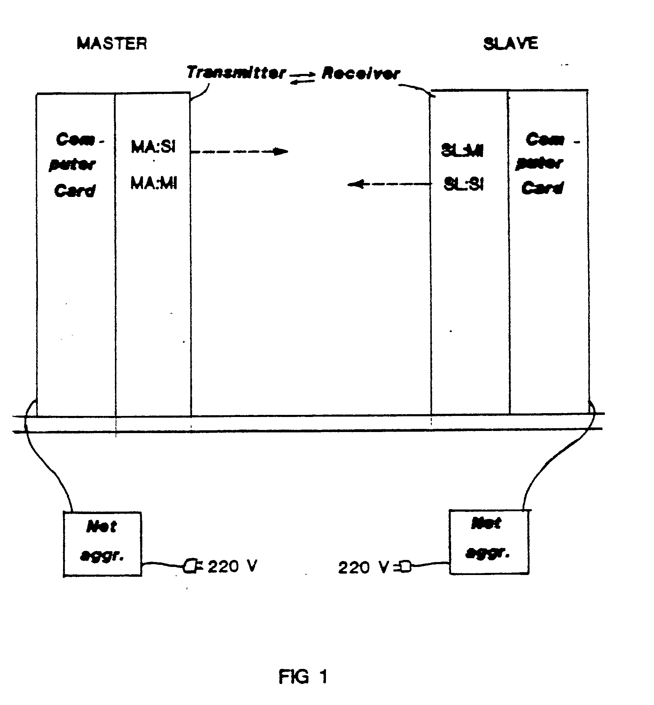

Figure 1 illustrates schematically how the light screen system is constructed;

Figure 2 is a block schematic of one of two identical processor units having four transmitter and four receiver units; and a main unit;

Figure 3 is a circuit diagram for one of the two identical units;

Figure 4 illustrates the pulse-train communication between the two processor units Master and Slave, and also illustrates the change in the pulse train after each step;

Figure 5 shows the shape of the pulses; and

Figure 6 is a flow diagram of the programmes of the two microprocessors.

The light screen comprises two totally separate micro processors which are separated galvanically and which communicate with one another via the light curtain, i.e. the one data processor sends information with invisible IR-light to the other processor, and vice versa. With respect to hardware, the two processor systems are identical, while their software (data cards) are mutually different. When programmed, the one data processor assumes the character of a so-called Master, and the other the character of a so-called Slave. This merely means that the one data processor has predominance when starting-up and the like. Connected to the data processors in the drawings are four identical transmitter units and four identical receiver units, e.g. light diodes for invisible light and photodiodes or phototransisters. In addition, there is provided a mains unit for the various data systems.

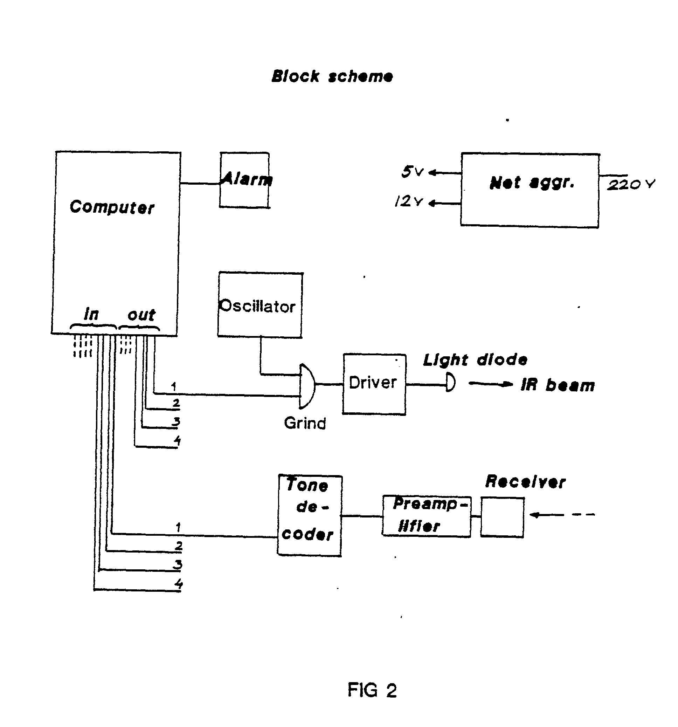

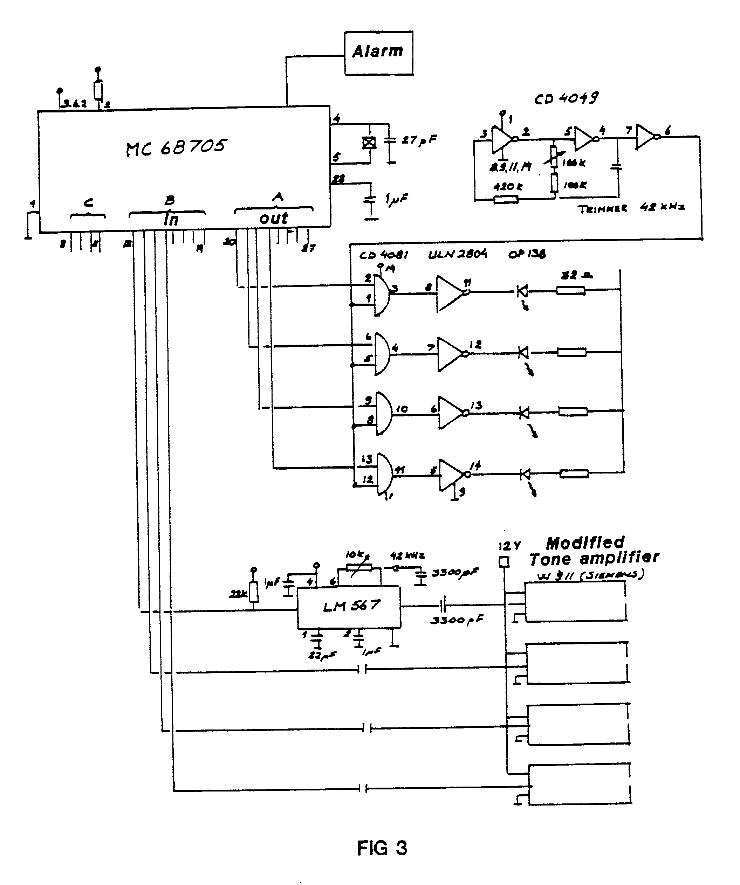

The light diode is driven by a so-called driver (a current amplifier), Figure 2. The current amplifier on the receiver side is sensitive to a given frequency, e.g. 42 kHz, and consequently the transmitter must also be pulsed with the same frequency. This is effected by means of an oscillator, the frequency of which is set to 42 kHz. The oscillator pulses are added logically to the information-carrying pulses of the data processor by means of a so-called gate. Arranged on the receiver side is a photodiode incorporating an associated amplifier in an aluminium casing. The signal then passes to a tone decoder, which may be a phase-locked circuit having a frequency of 42 kHz, Figure 3.

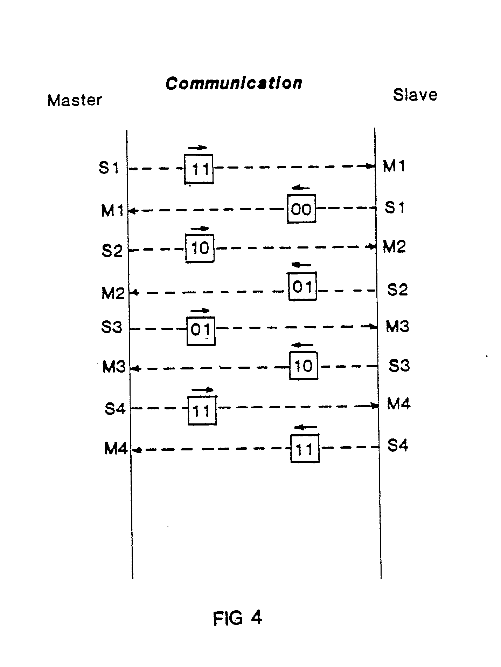

The Operational Mode of the Data Processors The basic principle of the present invention is to cause two completely separate data processors to communicate with one another in an interactive manner, i.e. one data processor controls the operational mode of the other data processor and vice versa. This means that the total function is twice as safe. The principle of communication is one in which the transmitter S1 of the Master transmits a code communication to the receiver M, in accordance with Figure 4. This code can contain two ones (11). The Slave re-sends through the transmitter S1 a new code to the receiver M1 of the Master, namely two zeros (00) for example, i.e. it inverts both data bits. If this code (00) reaches the receiver M1 of the Master, the transmitter S2 of the Master sends a new code, in this case a one and a zero (10). If the light screen remains undisturbed, i.e. no object is present in the screen opening, all code words are sent, in accordance with Figure 4, whereupon the Master begins again from the beginning. Should a light beam be broken, e.g. the light beam transmitted from the transmitter S2 of the Master to the receiver M2 of the Slave, the Slave will wait, in vain, for a pulse for five ms, and when receiving no pulse within this period of time will initiate an alarm signal or will activate a relay or like device, to stop the machine. After a further few micro seconds have lapsed, the receiver M2 of the Master will become aware that the chain has been broken, i.e. the receiver receives no signal and also passes immediately into an alarm state. At the same time as the Master switches to an alarm state, it begins to transmit a signal to the transmitter M1 etc., so as to be able to check whether the fault is temporary or permanent. If the fault still exists when the signal reaches receiver M2, the alarm state of the Master will continue. This means that each data processor is not only monitored by the light screen and the second data processor, but also by all components in the two systems. This doubles the functional safety of the systems.

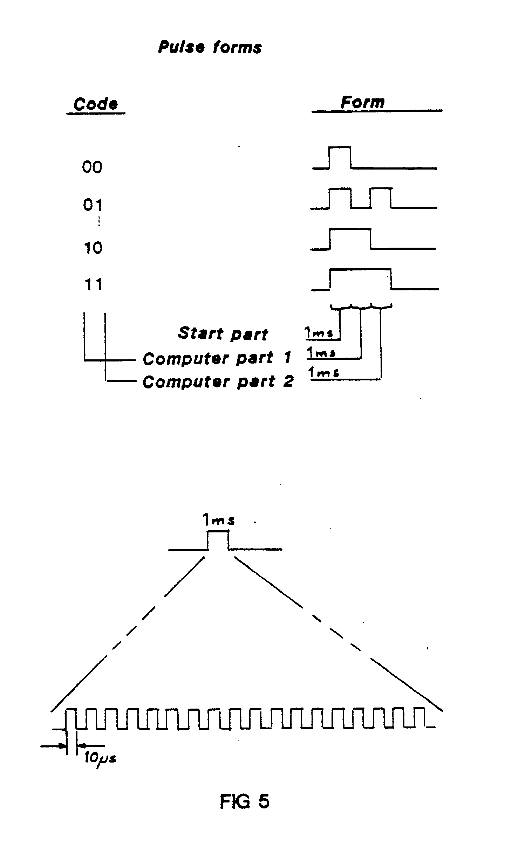

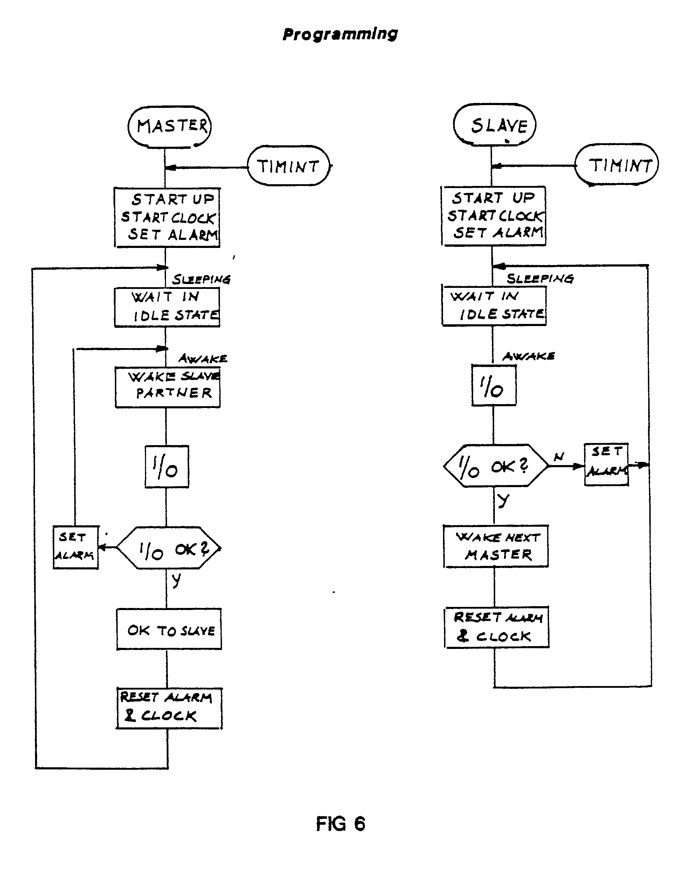

The shape or appearance of the pulses is shown in Figure 5. Each pulse begins with a so-called start bit having a duration of one ms, the start bit being followed by two data bits. Each data bit has a length of one ms. When a data bit has a length of one ms, the transmitter transmits pulsating infrared light having a frequency of 42 kHz. Figure 6 illustrates a flow sheet for the programmes of the two data processors. The programmes of the two data processors are written in their entirety in Figure 2.

In order to avoid optical activity in the paths travelled by the light beams, each of the transmitters S and the receivers M are mounted approximately 40 mm in their respective holes in the aforesaid holders. This provides a certain degree of collimation of the beams. Despite these holes, the beams spread or widen quite considerably, which means that the light diode or transmitter 1 can be sensed by both the receivers 1 and 2, and possibly also by the receiver 3. This makes no difference, however, since each data processor itself chooses, in an intelligent manner, which receiver shall be active at each moment.

## Claims

1. A micro-processor-controlled light screen comprising a plurality of light transmitters and light receivers arranged in a holder on a first side of a screen opening, and a corresponding number of light receivers and light transmitters arranged in a holder on the second side of said screen opening, whereby mutually opposite light transmitters and light receivers are sequentially actuable in pairs from a data processor over a given period of time, characterized in that the data processor for each light transmitter, via a current amplifier, and for each light receiver, via a tone amplifier, respectively, is programmed so that light pulse trains (codes) are transmitted from a light transmitter on a first side, and received in a first light receiver on a second side, the received code then being changed and transmitted from said second side via a second light transmitter to a second light receiver on said first side.

2. A light screen according to claim 1, characterized in that the light transmitters and light receivers on the respective sides are connected to identical data processor units (microprocessors).

3. A light screen according to claim 2, characterized in that with respect to hardware the data processor units (microprocessors) on both sides of the screen opening are identical, but contain mutually different software.

4. A light screen according to claim 3, characterized in that the data processor unit on one side of the opening functions as a Master, and the data processor unit on the other side functions as a Slave.

5. A light screen according to any one of the preceding claims, characterized in that the data processor units are programmed to change received codes, and to transmit the changed codes to the opposite side.

6. A light screen according to claim 5, characterized in that the data units are programmed to invert received codes, and to send said inverted codes to the receiver on the opposite side.

7. A light screen according to any one of the preceding claims, characterized in that the data units have a plurality of light transmitters and light receivers, respectively, and also a main unit.

## Patentansprüche

1. Mikroprozessorgesteuerter Lichtschirm mit einer Mehrzahl von Lichtsendern und Lichtempfängern, welche in einem Halter an einer ersten Seite einer Schirmöffnung angeordnet sind, und einer entsprechenden Anzahl von Lichtempfängern und Lichtsendern, welche in einem Halter auf der zweiten Seite der Schirmöffnung angeordnet sind, wobei wechselseitig gegenüberliegende Lichtsender und Lichtempfänger in Folge paarweise über einen gegebenen Zeitabschnitt von einem Datenverarbeitungsgerät betätigbar sind, dadurch gekennzeichnet, daß das Datenverarbeitungsgerät für jeden Lichtsender über einen Stromverstärker bzw. für jeden Lichtempfänger über einen Lautverstärker derart programmiert ist, daß Züge von Lichtulsen (codes) von einem ersten Lichtsender auf einer ersten Seite gesendet und von einem ersten Lichtempfänger auf einer zweiten Seite empfangen werden, wobei der empfangene Code dann verändert und von der zweiten Seite über einen zweiten Lichtsender zu einem zweiten Lichtempfänger auf der ersten Seite gesendet wird.

2. Lichtschirm nach Anspruch 1, dadurch gekennzeichnet, daß die Lichtsender und Lichtempfänger auf den entsprechenden Seiten mit identischen Datenverarbeitungseinheiten (Mikroprozessoren) verbunden sind.

3. Lichtschirm nach Anspruch 2, dadurch gekennzeichnet, daß im Hinblickauf die Hardware die Datenverarbeitungseinheiten (Mikroprozessoren) auf beiden Seiten der Schirmöffnung identisch sind, jedoch wechselseitig verschiedene Software enthalten.

4. Lichtschirm nach Anspruch 3, dadurch gekennzeichnet, daß die Datenverarbeitungseinheit auf einer Seite der Öffnung als Master und die Datenverarbeitungseinheit auf der anderen Seite als Slave arbeitet.

5. Lichtschirm nach einem der vorstehenden Ansprüche, dadurch gekennzeichnet, daß die Datenverarbeitungseinheiten so programmiert sind, daß sie die empfangenen Codes ändern und die geänderten Codes zu der gegenüberliegenden Seite übertragen.

6. Lichtschirm nach Anspruch 3, dadurch gekennzeichnet, daß die Dateneinheiten so programmiert sind, daß sie die empfangenen Codes invertieren und die invertierten Codes zu dem Empfänger auf der gegenüberliegenden Seite senden.

7. Lichtschirm nach einem der vorstehenden Ansprüche, dadurch gekennzeichnet, daß die Dateneinheiten eine Vielzahl von Lichtsendern bzw. Lichtempfängern und ebenso eine Haupteinheit haben.

**Revendications**

1. Ecran lumineux à commande par·microprocesseur comprenant une pluralité d'émetteurs de lumière et de récepteurs de lumière disposés dans un support d'un premier côté d'une ouverture d'écran et un nombre correspondant de récepteurs de lumière et d'émetteurs de lumière disposés en un support du second côté de l'ouverture de l'écran, dans lequel les émetteurs de lumière et les récepteurs de lumière se faisant mutuellement face sont actionnables séquentiellement par paires à partir d'un processeur de données pendant une durée donnée, caractérisé en ce que le processeur de données de chaque émetteur de lumière par l'intermédiaire d'un amplificateur de courant, et de chaque récepteur de lumière par l'intermédiaire d'un amplificateur de fréquence, respectivement, est programmé de sorte que des trains (codes) d'impulsions lumineuses sont transmis à partir d'un premier émetteur de lumière d'un premier côté et reçus dans un premier récepteur de lumière du second côté, le code reçu étant alors modifié et émis à partir du second côté par l'intermédiaire d'un second émetteur de lumière vers un second récepteur de lumière du premier côté.

2. Ecran lumineux selon la revendication 1, caractérisé en ce que les émetteurs de lumière et récepteurs de lumière des côtés respectifs sont connectés à des modules de processeurs de données identiques (microprocesseurs).

3. Ecran lumineux selon la revendication 2, caractérisé en ce que, en ce qui concerne le matériel, les modules de processeurs de données (microprocesseurs) des deux côtés de l'ouverture de l'écran sont identiques, mais contiennent des logiciels mutuellement différents.

4. Ecran lumineux selon la revendication 3, caractérisé en ce que le module de processeur de données d'un premier côté de l'ouverture agit en temps qui Maître et le module de processeur de données de l'autre côté agit en tant qu'Esclave.

5. Ecran lumineux selon l'une quelconque des revendications précédentes, caractérisé en ce que les modules de processeurs sont programmés pour modifier des codes reçus et pour émettre les codes modifiés vers le côté opposé.

6. Ecran lumineux selon la revendication 5, caractérisé en ce que les modules de données sont programmés pour inverser les codes reçus et pour envoyer les codes inversés au récepteur du côté opposé.

7. Ecran lumineux selon l'une quelconque des revendications précédentes, caractérisé en ce que les modules de données comprennent une pluralité d'émetteurs de lumière et de récepteurs de lumière, respectivement, et également un module principal.

MASTER                                                    SLAVE

Transmitter ⇌ Receiver

| | | | |
|---|---|---|---|
| Com-<br>puter<br>Card | MA:SI<br><br>MA:MI | SL:MI<br><br>SL:SI | Com-<br>puter<br>Card |

Net<br>aggr.                      ⌐⊏ 220 V          220 V ⊏⌐          Net<br>aggr.

FIG 1

**Block scheme**

FIG 2

FIG 3

**Communication**

Master                                    Slave

FIG 4

0 129 577

**Pulse forms**

| Code | Form |
|------|------|

00

01
:
10

11

Start part   1ms
Computer part 1   1ms
Computer part 2   1ms

1ms

10μs

FIG 5

5

**Programming**

FIG 6